# EUROPEAN PATENT APPLICATION

(11) **EP 4 622 036 A1**
(43) Date of publication of application: **24.09.2025**
(21) Application number: 24165575.2
(22) Date of filing: 22.03.2024
(51) Int. Cl.: H02J 3/14, H02J 3/32

(54) **SYSTEM FOR CONTROLLING A CONSUMPTION OF ELECTRICAL ENERGY**

(71) Applicant: Mitsubishi Electric R&D Centre Europe B.V., Livingston EH54 5DJ (GB); MITSUBISHI ELECTRIC CORPORATION, Chiyoda-ku Tokyo 100-8310 (JP)
(72) Inventor: CHOWDHURY, Jahedul, Livingston, EH54 5DJ (GB); FREEMAN, James, Livingston, EH54 5DJ (GB); OLKIS, Christopher, Livingston, EH54 5DJ (GB)
(74) Representative: Pfenning, Meinig & Partner mbB

(57) **Abstract**

A system for controlling a consumption of electrical energy is provided. The system comprises an electrical grid connection, at least one renewable energy generation device, at least one stationary electrical energy storage device, at least one thermal energy storage device, a heat pump, at least one forecast data source which is suitable to provide an electricity tariff forecast, at least one mobile electrical energy storage device being detachably connected to the system and a controller. The controller is configured to obtain information of the at least one forecast data source and is configured to control a charging and a discharging of the at least one stationary electrical energy storage device and of the at least one mobile electrical energy storage device based on information obtained from the at least one forecast data source. The system according to the invention allows minimization of operational costs, i.e. allows to reduce the cost of electricity for a building to which the system is connected.

## Description

A system for controlling a consumption of electrical energy is provided. The system comprises an electrical grid connection, at least one renewable energy generation device, at least one stationary electrical energy storage device, at least one thermal energy storage device, a heat pump, at least one forecast data source which is suitable to provide an electricity tariff forecast, at least one mobile electrical energy storage device being detachably connected to the system and a controller. The controller is configured to obtain information of the at least one forecast data source and is configured to control a charging and a discharging of the at least one stationary electrical energy storage device and of the at least one mobile electrical energy storage device based on information obtained from the at least one forecast data source. The system according to the invention allows minimization of operational costs, i.e. allows to reduce the cost of electricity for a building to which the system is connected.

Building decarbonization is a critical component of efforts to combat climate change and reduce greenhouse gas emissions. Buildings are a significant source of carbon dioxide (CO₂) emissions globally, primarily due to their energy consumption for heating, cooling, lighting, and appliances. Achieving it requires a multifaceted approach that combines energy efficiency measures, renewable energy integration, policy support, and technological innovation.

Integration of renewable energy sources (RES), such as solar photovoltaics (PV) or wind turbines, on or near buildings, can provide clean, on-site energy generation to offset electricity use from fossil fuel. However, electricity generation from solar PV is highly intermittent and creates a mismatch in generation and demand.

Electrical energy storage (EES) such as batteries can help buildings store excess energy generated from renewables and use it when needed, reducing reliance on grid energy.

On the other hand, transitioning from fossil fuel-based heating systems (e.g., natural gas furnaces) to electric alternatives (e.g., heat pumps) can decarbonize heating and cooling. A heat pump is a device that uses a small amount of energy to transfer heat from air or ground to the indoor spaces. It is a highly efficient technology commonly used for heating and cooling applications in residential, commercial, and industrial settings, which has a typical coefficient of performance of 3 - meaning 3 units of thermal energy output for one unit of electrical energy input. Heat pumps with thermal energy storage (TES) such as storage for domestic hot water (DHW) and space heating (SH) can provide opportunities to provide flexibility for storing surplus electricity from solar PV and other local renewable sources as heat, which could offset further grid imports and help to accelerate the decarbonisation of heating.

Electric vehicles (EVs) are another essential part of future energy systems for decarbonised buildings, due to a convergence of environmental, economic, and technological factors. Electric vehicles can put pressure on building energy systems, as more and more customers are willing to charge their EVs at home, but also offer several opportunities for synergy and optimization including demand response, load flexibility, on-site renewable integration, etc.

Conventionally, most components of building energy system are being manufactured, optimised and operated separately, leaving the building energy management to become more inefficient, costly and dependent on the electrical grid. The higher costs and lower self-sufficiency (due to higher electrical grid dependency) could hinder the uptake of RES technologies by the residential consumers.

In recent years, a multi-component integration to optimise energy use has been implemented. An example of such a system is a PV-EES smart system or a PV-EV smart system, where surplus PV generation is stored in EES or EVs. A more recent example of such integration is the integration of PV and heat pumps with TES.

However, the cost of electricity with these systems is still high because of the buildings' high reliance on grid electricity outside the summer months.

In recent times, energy companies have come up with alternative tariff structures to obtain electrical energy from the electrical grid at a cheaper rate (e.g. overnight).

Based on the above, the objective of the present invention is to provide a system for controlling a consumption of electrical energy which minimizes operational costs (i.e. reduces the cost of electricity for a building). Preferably, the system should also maximise renewable self-consumption, improve self-sufficiency and improve the carbon-footprint.

The objective is solved by the system having the features of claim 1. The dependent claims show advantageous embodiments thereof.

A system for controlling a consumption of electrical energy is provided, comprising
a) an electrical grid connection for providing the system with electrical energy;
b) at least one renewable energy generation device for providing the system with electrical energy;
c) at least one stationary electrical energy storage device comprising a state of charge analyser which is configured to determine an amount of electrical energy stored in the at least one stationary electrical energy storage device;
d) at least one thermal energy storage device comprising a state of charge analyser which is configured to determine an amount of thermal energy stored in the at least one thermal energy storage device;
e) a heat pump for providing the at least one thermal energy storage device with heat energy;
f) at least one forecast data source which is suitable to provide an electricity tariff forecast; and
g) a controller which is configured to obtain information of the at least one forecast data source and which is configured to control a charging and a discharging of the at least one stationary electrical energy storage device based on information obtained from the at least one forecast data source;

characterised in that the system comprises at least one mobile electrical energy storage device being detachably connected to the system and comprising a state of charge analyser which is configured to determine an amount of electrical energy stored in the at least one mobile electrical energy storage device,
wherein the controller is configured to control a charging and a discharging of the at least one mobile electrical energy storage device based on information obtained from the at least one forecast data source.

The configuration of the controller of the system allows minimisation of operational costs (i.e. reduces the cost of electricity for a building to which the system is connected). In other words, the system is configured to utilise cheaper electricity tariffs from the electrical grid to charge the at least one stationary electrical energy storage device (sEES) and the at least one mobile electrical energy storage device (eEES), optionally also to charge the at least one thermal energy storage device (TES) by converting electrical energy into thermal energy by means of a heat pump and/or a resistance heater of the system, with energy and to discharge energy into a building (to which the system is connected) when required during a peak price period. This reduces the cost of operation of the system, i.e. the cost for electricity for a building to which the system is connected, significantly.

In the system of the invention, the components can be operated not only individually in their optimised ways ("normal operation") but also together in an optimised way. Dispatchable loads in a building (such as sEES storage, eEES storage, and the heat pump(s) or electrical heater(s) with TES) can be dispatched individually or collectively in response to an import of grid electricity during cheap tariff periods. The controller is configured to decide how much energy should be imported from the electrical grid and by which dispatchable loads based on the forecast data. A utilisation of electrical grid imports during a cheap tariff period prevents the need for expensive electrical grid import during a peak tariff period. This allows an optimal and cost-effective operation of system. The presence of the at least one mobile electrical energy storage device (eEES) and the configuration of the controller to control a charge and discharge of said eEES also enhances self-consumption and self-sufficiency and can also improve the carbon-footprint of the system (and of a building equipped with the system).

The controller can be configured to obtain information of the at least one forecast data source, or of a further data source, which is suitable to provide a forecast about an energy stored in the mobile electrical energy storage device, wherein the mobile electrical energy storage device is preferably an electric vehicle. This improves self-sufficiency of the system.

Moreover, the controller can be configured to obtain information of the at least one forecast data source, or of a further data source, which is suitable to provide a forecast about a production of electrical energy by the at least one renewable energy generation device. This improves renewable self-consumption, the carbon footprint and self-sufficiency of the system.

Furthermore, the controller can be configured to obtain information of the at least one forecast data source, or of a further data source, which is suitable to provide a forecast about a consumption of energy of a building provided by the at least one forecast unit. This improves self-sufficiency of the system.

In addition, the controller can be configured to obtain information of the at least one forecast data source, or of a further data source, which is suitable to provide a forecast about weather, preferably a solar irradiance forecast, ambient temperature forecast and/or wind speed forecast, wherein the forecast is preferably provided by the at least one data source. This improves renewable self-consumption, the carbon footprint and self-sufficiency of the system.

In a preferred embodiment, the controller is configured to control a charging and a discharging of the at least one stationary electrical energy storage device and of the at least one mobile electrical energy storage device based on information obtained from the at least one forecast data source or of the further data source. This can improve renewable self-consumption, the carbon footprint and/or self-sufficiency of the system.

The controller can be configured to perform iterations of control parameters of the system in predefined periods of time. This improves robustness in handling an uncertainty of forecast data. For example, if an actual generation of electrical energy by the at least one renewable energy generation device is more than a predicted energy generation by the at least one renewable energy generation device and the EES state of charge (SOC) is full, TES charging could be initiated to store surplus renewables energy as heat in the at least one thermal energy storage device.

The controller can be configured to perform iterations of control parameters of the system in predefined periods of time to receive, in predefined periods of time, updates regarding a forecast relating to an electricity tariff. This improves minimization of the operational costs of the system.

The controller can be configured to, in a period of time in which a forecast relating to the electricity tariff reveals a cheap electricity tariff, determine an amount of electrical energy which is provided from the electrical grid for charging the at least one stationary electrical energy storage device based on a forecast relating to a consumption of energy of a building. This improves minimization of the operational costs of the system.

Moreover, the controller can be configured to, in a period of time in which a forecast relating to the electricity tariff reveals a cheap electricity tariff, determine an amount of electrical energy which is provided from the electrical grid for charging the at least one stationary electrical energy storage device based on a forecast relating to a production of electrical energy by the at least one renewable energy generation device. This improves renewable energy self-consumption, the carbon footprint and/or self-sufficiency of the system.

Besides, the controller can be configured to, in a period of time in which a forecast relating to the electricity tariff reveals a cheap electricity tariff, determine an amount of electrical energy which is provided from the electrical grid for charging the at least one stationary electrical energy storage device based on a forecast relating to a current state of charge of the at least one stationary electrical energy storage device. This minimizes operational costs, maximises renewable energy self-consumption by preventing an overcharging of the at least one stationary electrical energy storage device with electrical energy from the grid, so that sufficient storage capacity is reserved for storing electrical energy produced by the renewable energy generation device. This configuration can also ensure that not more than is required (e.g. for a period of one day) is charged from the grid, considering all the factors such as demand, supply from the renewable energy generation device and the state of charge of the at least one stationary electrical energy storage device. In other words, supply and demand (e.g. by the end of each day) can be balanced.

Additionally, the controller can be configured to, in a period of time in which a forecast relating to the electricity tariff reveals a cheap electricity tariff, determine an amount of electrical energy which is provided from the electrical grid for charging the at least one stationary electrical energy storage device based on a forecast relating to a lower limit state of charge of the at least one stationary electrical energy storage device. This minimizes operational costs by preventing damage to the at least one stationary electrical energy storage device due to excessive discharging.

The controller can be configured to, in a period of time in which a forecast relating to the electricity tariff reveals a cheap electricity tariff, to determine an amount of electrical energy which is provided from the electrical grid for charging the at least one mobile electrical energy storage device based on a forecast relating to a consumption of energy of the at least one mobile electrical energy storage device. This improves minimization of the operational costs of the system and improves self-sufficiency of the system.

Moreover, the controller can be configured to, in a period of time in which a forecast relating to the electricity tariff reveals a cheap electricity tariff, to determine an amount of electrical energy which is provided from the electrical grid for charging the at least one mobile electrical energy storage device based on a forecast relating to a production of electrical energy by the at least one renewable energy generation device. This improves renewable self-consumption, the carbon footprint and/or self-sufficiency of the system.

Furthermore, the controller can be configured to, in a period of time in which a forecast relating to the electricity tariff reveals a cheap electricity tariff, to determine an amount of electrical energy which is provided from the electrical grid for charging the at least one mobile electrical energy storage device based on a forecast relating to a provision of electrical energy by the electrical grid. This improves minimization of operational costs.

Besides, the controller can be configured to, in a period of time in which a forecast relating to the electricity tariff reveals a cheap electricity tariff, to determine an amount of electrical energy which is provided from the electrical grid for charging the at least one mobile electrical energy storage device based on a forecast relating to a current state of charge of the at least one mobile electrical energy storage device. This minimizes operational costs by preventing an overcharging the at least one mobile electrical energy storage device.

Additionally, the controller can be configured to, in a period of time in which a forecast relating to the electricity tariff reveals a cheap electricity tariff, to determine an amount of electrical energy which is provided from the electrical grid for charging the at least one mobile electrical energy storage device based on a forecast relating to a lower limit state of charge of the at least one mobile electrical energy storage device. This minimizes operational costs by preventing damage to the at least one mobile electrical energy storage device due to excessive discharging.

The controller can be configured to, in a period of time in which a forecast relating to the electricity tariff reveals an expensive electricity tariff, set a setpoint of a lower limit state of charge of the at least one stationary electrical energy storage device to a setpoint which prevents a requirement to charge from the electrical grid, preferably only once for each period of time in which a forecast relating to the electricity tariff reveals an expensive electricity tariff. This minimizes operational costs.

Moreover, the controller can be configured to, in a period of time in which a forecast relating to the electricity tariff reveals an expensive electricity tariff, set a setpoint of a lower limit state of charge of the at least one mobile electrical energy storage device to a setpoint which prevents a requirement to charge from the electrical grid, preferably only once for each period of time in which a forecast relating to the electricity tariff reveals an expensive electricity tariff. This minimizes operational costs.

The controller can be configured to, in a period of time in which a forecast relating to the electricity tariff reveals a cheap electricity tariff, and a forecast relating to a provision of electrical energy from the electrical grid reveals a provision of electrical energy of more than zero, set an upper limit state of charge threshold of the at least one stationary electrical energy storage device to control a charging limit of the at least one stationary electrical energy storage device.

Moreover, the controller can be configured to, in a period of time in which a forecast relating to the electricity tariff reveals a cheap electricity tariff, and a forecast relating to a provision of electrical energy from the electrical grid reveals a provision of electrical energy of zero, set a lower limit state of charge threshold of the at least one stationary electrical energy storage device to control a discharging limit of the at least one stationary electrical energy storage device.

Furthermore, the controller can be configured to, in a period of time in which a forecast relating to the electricity tariff reveals a cheap electricity tariff, and a forecast relating to an energy consumption from the at least one mobile electrical energy storage device reveals an energy consumption which is larger than an energy which is available in the at least one mobile electrical energy storage device, set an upper limit state of charge threshold of the at least one mobile electrical energy storage device to control a charging limit of the at least one mobile electrical energy storage device.

Besides, the controller can be configured to, in a period of time in which a forecast relating to the electricity tariff reveals a cheap electricity tariff, and a forecast relating to an energy consumption from the at least one mobile electrical energy storage device reveals an energy consumption which is equal to or lower than an energy which is available in the at least one mobile electrical energy storage device, set a lower limit state of charge threshold of the at least one mobile electrical energy storage device to control a discharging limit of the at least one mobile electrical energy storage device.

The controller can be configured to, in a period of time in which a forecast relating to the electricity tariff reveals an expensive electricity tariff, and a forecast relating to a production of electrical energy by the at least one renewable energy generation device reveals a surplus of energy production, set an upper limit state of charge threshold of the at least one thermal energy storage device to control a charging limit of the at least one thermal energy storage device, and set a target room temperature setpoint. This minimizes operational costs and improves renewable self-consumption, the carbon footprint and self-sufficiency of the system.

Moreover, the controller can be configured to, in a period of time in which a forecast relating to the electricity tariff reveals an expensive electricity tariff, and a forecast relating to a production of electrical energy by the at least one renewable energy generation device reveals no surplus of energy production, set a lower limit state of charge threshold of the at least one thermal energy storage device to control a discharging limit of the at least one thermal energy storage device, and set a target room temperature setpoint. This minimizes operational costs and improves self-sufficiency of the system.

The controller can be configured to, in a period of time in which a forecast relating to the electricity tariff reveals a cheap electricity tariff, and an estimated excess electrical energy from the electrical grid needed for a building after fully charging the at least one stationary electrical energy storage device from the electrical grid is equal to or larger than an energy threshold for initiating a charging cycle of the at least one thermal energy storage device from the electrical grid, set an upper limit state of charge of the at least one thermal energy storage device to a boosted upper limit state of charge of the at least one thermal energy storage device and set a lower limit state of charge of the at least one thermal energy storage device to a boosted lower limit state of charge of the at least one thermal energy storage device.

Moreover, the controller can be configured to, in a period of time in which a forecast relating to the electricity tariff reveals a cheap electricity tariff, and an estimated excess electrical energy from the electrical grid needed for a building after fully charging the at least one stationary electrical energy storage device from the electrical grid is lower than an energy threshold for initiating a charging cycle of the at least one thermal energy storage device from the electrical grid, set an upper limit state of charge of the at least one thermal energy storage device to a normal upper limit state of charge of the at least one thermal energy storage device and set a lower limit state of charge of the at least one thermal energy storage device to a normal lower limit state of charge of the at least one thermal energy storage device.

The controller can be configured to, in a period of time in which a forecast relating to the electricity tariff reveals a cheap electricity tariff, and a state of charge of the at least one stationary electrical energy storage device is lower than an upper limit state of charge of the at least one stationary electrical energy storage device, allow a charging of the at least one stationary electrical storage device from the electrical grid and prohibit a discharging of the at least one stationary electrical storage device.

Furthermore, the controller can be configured to, in a period of time in which a forecast relating to the electricity tariff reveals a cheap electricity tariff, and a state of charge of the at least one stationary electrical energy storage device is equal to or larger than an upper limit state of charge of the at least one stationary electrical energy storage device, prohibit a charging of the at least one stationary electrical storage device from the electrical grid and allow a discharging of the at least one stationary electrical storage device.

The controller can be configured to, in a period of time in which a forecast relating to the electricity tariff reveals a cheap electricity tariff, and a state of charge of the at least one mobile electrical energy storage device is lower than an upper limit state of charge of the at least one mobile electrical energy storage device, allow a charging of the at least one mobile electrical storage device from the electrical grid and prohibit a discharging of the at least one mobile electrical storage device to a device connected to the system.

Besides, the controller can be configured to, in a period of time in which a forecast relating to the electricity tariff reveals a cheap electricity tariff, and a state of charge of the at least one mobile electrical energy storage device is equal to or larger than an upper limit state of charge of the at least one mobile electrical energy storage device, prohibit a charging of the at least one mobile electrical storage device from the electrical grid and prohibit a discharging of the at least one mobile electrical storage device to a device connected to the system.

The controller can be configured to, in a period of time in which a forecast relating to the electricity tariff reveals an expensive electricity tariff, and the at least one stationary electrical storage device is currently discharging and a state of charge of the at least one stationary electrical storage device is higher than a lower limit state of charge of the at least one stationary electrical storage device, allow a further discharging of the at least one stationary electrical storage device.

Moreover, the controller can be configured to, in a period of time in which a forecast relating to the electricity tariff reveals an expensive electricity tariff, and the at least one stationary electrical storage device is currently discharging and a state of charge of the at least one stationary electrical storage device is equal to or lower than a lower limit state of charge of the at least one stationary electrical storage device, prohibit a further discharging of the at least one stationary electrical storage device.

Furthermore, the controller can be configured to, in a period of time in which a forecast relating to the electricity tariff reveals an expensive electricity tariff, and the at least one stationary electrical storage device is currently not discharging and a state of charge of the at least one stationary electrical storage device is lower than an upper limit state of charge of the at least one stationary electrical storage device, allow a charging of the at least one stationary electrical storage device from the at least one renewable energy generation device only.

Besides, the controller can be configured to, in a period of time in which a forecast relating to the electricity tariff reveals an expensive electricity tariff, and the at least one stationary electrical storage device is currently not discharging and a state of charge of the at least one stationary electrical storage device is equal to or higher than an upper limit state of charge of the at least one stationary electrical storage device, prohibit a charging of the at least one stationary electrical storage device.

The controller can be configured to, in a period of time in which a forecast relating to the electricity tariff reveals an expensive electricity tariff, and the at least one mobile electrical storage device is currently discharging, a state of charge of the at least one mobile electrical storage device is higherthan a lower limit state of charge of the at least one mobile electrical storage device and a state of charge of the at least one stationary electrical storage device is equal to or lower than a lower limit state of charge of the at least one stationary electrical storage device, allow a discharging of the at least one mobile electrical storage device.

Moreover, the controller can be configured to, in a period of time in which a forecast relating to the electricity tariff reveals an expensive electricity tariff, and the at least one mobile electrical storage device is currently discharging, a state of charge of the at least one mobile electrical storage device is higherthan a lower limit state of charge of the at least one mobile electrical storage device and a state of charge of the at least one stationary electrical storage device is higher than a lower limit state of charge of the at least one stationary electrical storage device, prohibit a discharging of the at least one mobile electrical storage device.

Furthermore, the controller can be configured to, in a period of time in which a forecast relating to the electricity tariff reveals an expensive electricity tariff, and the at least one mobile electrical storage device is currently discharging and a state of charge of the at least one mobile electrical storage device is equal to or lower than a lower limit state of charge of the at least one mobile electrical storage device, prohibit a discharging of the at least one mobile electrical storage device.

Besides, the controller can be configured to, in a period of time in which a forecast relating to the electricity tariff reveals an expensive electricity tariff, and the at least one mobile electrical storage device is currently not discharging, a state of charge of the at least one stationary electrical storage device is equal to or higher than an upper limit state of charge of the at least one stationary electrical storage device and a state of charge of the at least one mobile electrical storage device is lower than an upper limit state of charge of the at least one mobile electrical storage device, allow a charging of the at least one mobile electrical storage device from the at least one renewable energy generation device only.

Additionally, the controller can be configured to, in a period of time in which a forecast relating to the electricity tariff reveals an expensive electricity tariff, and the at least one mobile electrical storage device is currently not discharging, a state of charge of the at least one stationary electrical storage device is equal to or higher than an upper limit state of charge of the at least one stationary electrical storage device and a state of charge of the at least one mobile electrical storage device is equal to or higher than an upper limit state of charge of the at least one mobile electrical storage device, prohibit a charging of the at least one mobile electrical storage device.

What is more, the controller can be configured to, in a period of time in which a forecast relating to the electricity tariff reveals an expensive electricity tariff, and at least one mobile electrical storage device is currently not discharging and a state of charge of the at least one stationary electrical storage device is lower than an upper limit state of charge of the at least one stationary electrical storage device, prohibit a charging of the at least one mobile electrical storage device.

The controller can be configured to, in a period of time in which a forecast relating to the electricity tariff reveals a cheap electricity tariff, and a state of charge of the at least one thermal energy storage device is lower than an upper limit state of charge of the at least one thermal energy storage device, allow a charging of the at least one thermal energy storage device.

Moreover, the controller can be configured to, in a period of time in which a forecast relating to the electricity tariff reveals a cheap electricity tariff, and a state of charge of the at least one thermal energy storage device is equal to or higher than an upper limit state of charge of the at least one thermal energy storage device, prohibit a charging of the at least one thermal energy storage device.

The controller can be configured to, in a period of time in which a forecast relating to the electricity tariff reveals an expensive electricity tariff, and there is no surplus of energy from the at least one renewable energy generation device, perform a normal operation of the heat pump.

Furthermore, the controller can be configured to, in a period of time in which a forecast relating to the electricity tariff reveals an expensive electricity tariff, and there is a surplus of energy from the at least one renewable energy generation device and a state of charge of the at least one thermal energy storage device is lower than an upper limit state of charge of the at least one thermal energy storage device, allow a charging of the at least one thermal energy storage device.

Besides, the controller can be configured to, in a period of time in which a forecast relating to the electricity tariff reveals an expensive electricity tariff, and there is a surplus of energy from the at least one renewable energy generation device and a state of charge of the at least one thermal energy storage device is equal to or higher than an upper limit state of charge of the at least one thermal energy storage device, prohibit a charging of the at least one thermal energy storage device.

The system can comprise at least one second thermal energy storage device, preferably a space heating thermal energy storage device.

In this regard, the controller can be configured to, in a period of time in which a forecast relating to the electricity tariff reveals a cheap electricity tariff, and a forecast relating to a consumption of energy of a building reveals that the at least one second thermal energy storage device is required, and an estimated further electrical grid energy provision needed for the building after fully charging the at least one stationary electrical storage device and after fully charging the at least one thermal energy storage device is equal to or larger than an energy threshold for initiating a charging cycle of the at least one second thermal energy storage device from the electrical grid, set an upper limit state of charge of the at least one second thermal energy storage device to a boosted upper limit state of charge of the at least one second thermal electrical energy storage device and set a lower limit state of charge of the at least one second thermal energy storage device to a boosted lower limit state of charge of the at least one second thermal energy storage device.

Moreover, the controller can be configured to, in a period of time in which a forecast relating to the electricity tariff reveals a cheap electricity tariff, and a forecast relating to a consumption of energy of a building reveals that the at least one second thermal energy storage device is required, and an estimated further electrical grid energy provision needed for the building after fully charging the at least one stationary electrical storage device and after fully charging the at least one thermal energy storage device is lower than an energy threshold for initiating a charging cycle of the at least one second thermal energy storage device from the electrical grid, set an upper limit state of charge of the at least one second thermal energy storage device to a normal upper limit state of charge of the at least one second thermal energy storage device and set a lower limit state of charge of the at least one second thermal energy storage device to a normal lower limit state of charge of the at least one second thermal energy storage device.

The controller is preferably configured to, if an estimated remaining electrical grid energy provision needed for a building after fully charging the at least one stationary electrical storage device, after fully charging the at least one thermal energy storage device and after fully charging the at least one second thermal energy storage device from the electrical grid is larger than an energy threshold for initiating a heating cycle of a building from the electrical grid, set a target room temperature setpoint to a boosted target room temperature and set a room temperature deadband to a boosted room temperature deadband.

Moreover, the controller is preferably configured to, if an estimated remaining electrical grid energy provision needed for a building after fully charging the at least one stationary electrical storage device, after fully charging the at least one thermal energy storage device and after fully charging the at least one second thermal energy storage device from the electrical grid is equal to or lower than an energy threshold for initiating a heating cycle of the building from the electrical grid, set a target room temperature setpoint to a normal target room temperature and set a room temperature deadband to a normal room temperature deadband.

Moreover, the controller can be configured to, in a period of time in which a forecast relating to the electricity tariff reveals a cheap electricity tariff, and the at least one thermal energy storage device is currently not charging and a state of charge of the at least one second thermal energy storage device is lower than an upper limit state of charge of the at least one second thermal energy storage device, allow a charging of the at least one second thermal energy storage device.

Furthermore, the controller can be configured to, in a period of time in which a forecast relating to the electricity tariff reveals a cheap electricity tariff, and the at least one thermal energy storage device is currently not charging and a state of charge of the at least one second thermal energy storage device is equal to or higher than an upper limit state of charge of the at least one second thermal energy storage device, prohibit a charging of the at least one second thermal energy storage device.

The controller can be configured to perform a space heating from the heat pump if a measured room temperature is lower than a target room temperature setpoint, the at least one thermal energy storage device is not charging, a state of charge of the at least one second thermal energy storage is equal to or lower than a lower limit state of charge of the at least one second thermal energy storage device.

Moreover, the controller can be configured to perform a space heating from the heat pump if a measured room temperature is lower than a target room temperature setpoint, the at least one thermal energy storage device is not charging, a state of charge of the at least one second thermal energy storage is higher than a lower limit state of charge of the at least one second thermal energy storage device and at least one of the following is available: a cheap electricity tariff, electrical energy provided by the at least one renewable energy generation device and electrical energy stored by the at least one stationary electrical energy storage device.

Furthermore, the controller can be configured to perform a space heating from the heat pump if a measured room temperature is equal to or higher than a target room temperature setpoint and is lower than a sum of the target room temperature setpoint and a room temperature deadband, space heating is active, a state of charge of the at least one second thermal energy storage device is equal to or lower than a lower limit state of charge of the at least one second thermal energy storage device.

Besides, the controller can be configured to perform a space heating from the heat pump if a measured room temperature is equal to or higher than a target room temperature setpoint and is lower than a sum of the target room temperature setpoint and a room temperature deadband, space heating is active, a state of charge of the at least one second thermal energy storage device is higher than a lower limit state of charge of the at least one second thermal energy storage device and at least one of the following is available: a cheap electricity tariff, electrical energy provided by the at least one renewable energy generation device and electrical energy stored by the at least one stationary electrical energy storage device.

The controller can be configured to perform a space heating from the at least one second thermal energy storage device if a measured room temperature is lowerthan a target room temperature setpoint, the at least one thermal energy storage device is not charging, a state of charge of the at least one second thermal energy storage is higher than a lower limit state of charge of the at least one second thermal energy storage device and none of the following are available: a cheap electricity tariff, electrical energy provided by the at least one renewable energy generation device or electrical energy stored by the at least one stationary electrical energy storage device.

Moreover, the controller can be configured to perform a space heating from the at least one second thermal energy storage device if a measured room temperature is equal to or higher than a target room temperature setpoint and is lower than a sum of the target room temperature setpoint and a room temperature deadband, space heating is active, a state of charge of the at least one second thermal energy storage device is higher than a lower limit state of charge of the at least one second thermal energy storage device and none of the following are available: a cheap electricity tariff, electrical energy provided by the at least one renewable energy generation device or electrical energy stored by the at least one stationary electrical energy storage device.

The controller of the system can be selected from the group consisting of a controller located at a building, a remote controller and a cloud controller, wherein the controller is preferably a cloud controller. A cloud controller has the advantage that it reduces the requirement for multiple hardware interfaces, which allows a provision and operation of the system at lower costs.

With reference to the following figures and examples, the subject-matter of the present invention is intended to be explained in more detail without wishing to restrict said subject-matter to the specific embodiments shown here.

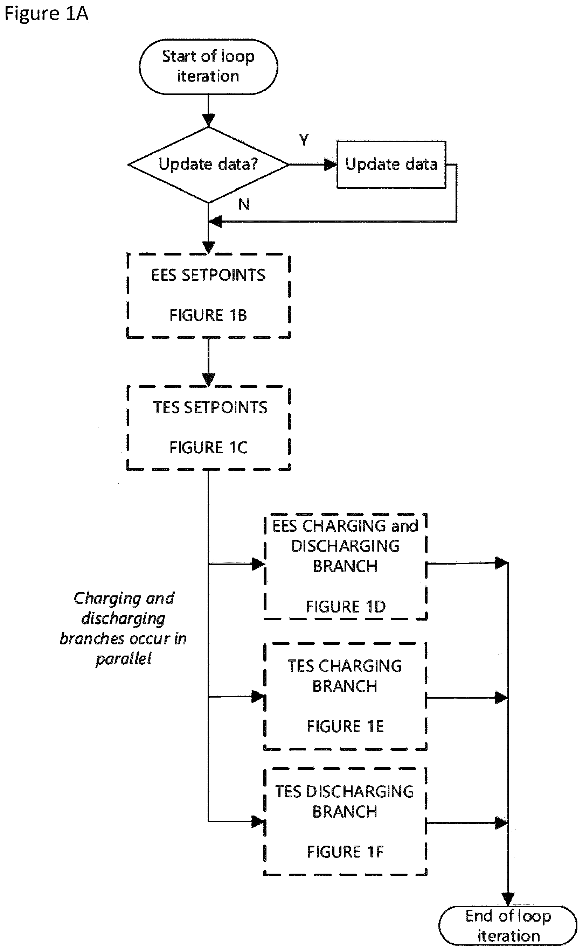

Figure 1A schematically illustrates a configuration of the controller of the system according to the invention for loop iteration. The controller is configured to perform iterations of the parameters of the controller periodically and to use updated system information based on operating states and measured variables. Moreover, the controller is configured to, on one or more times during a control period, update the forecasts and measured data. Although the controller is configured to update the measured data needs in each time step, the controller can be configured to update forecast data not during each loop iteration. Forecast data comprises time-of-use electricity tariffs and can also comprise solar irradiance, ambient temperature, wind speed, house energy demand, and PV generation.

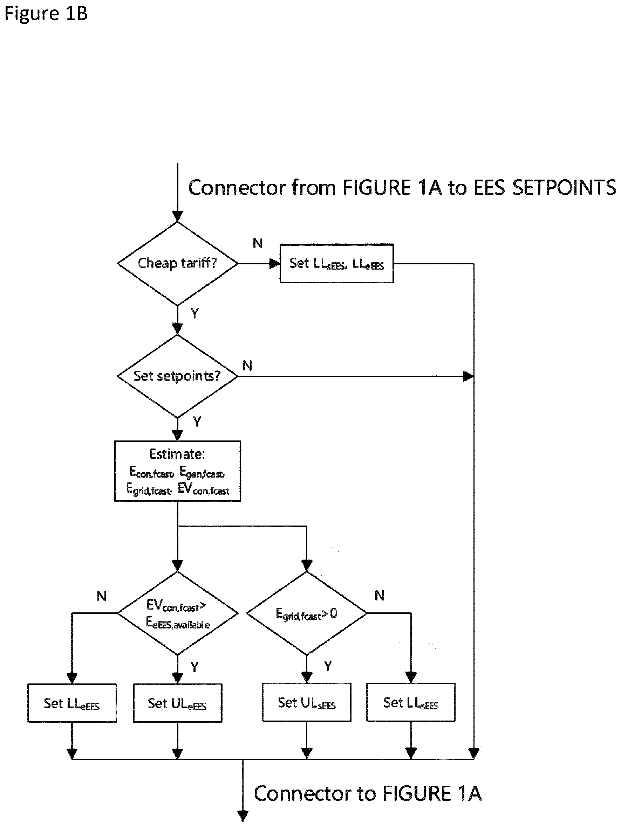

Figure 1B schematically illustrates a configuration of the controller of the system according to the invention for setting setpoints of electrical energy storage devices. The system according to the invention comprises two EESs, namely a stationary EES (sEES) and a mobile (disconnectable) EES (eEES) (e.g. an EV). The objectives of the EES setpoints are to set lower limit SOC for sEES and eEES to control the minimum discharge limit of the EES and to set upper limit SOC for sEES and eEES to control the charging of EES from the electrical grid. Depending on whether there is cheaper grid electricity available, the controller is configured to set the setpoints for EES to allow or prevent the EES charging from the grid. This setpoint setting should be done once for each cheap tariff period. Setting the setpoints more than once within a short timeframe is possible only if there is updated forecast data available. The controller is also configured to update the setpoints setting for other periods in each iteration loop. The controller is further configured to, in a cheap tariff period, determine the amount of electricity to be imported from the electrical grid to the sEES based on the house energy consumption forecast (E_{con,fcast}), PV generation forecast (E_{gen,fcast}), total grid import forecast (E_{grid,fcast}), current state of the charge (SOC_{sEES}), and lower limit state of charge (LL_{sEES}). The electrical grid import to the eEES (e.g. EV) is, however, independent of the house energy demand forecast. In this context, the controller is configured to determine an eEES consumption forecast based on a predictive model which can translate day ahead trips planned into daily consumption. Moreover, the controller is configured to, once the EV consumption forecast is higher than the available charged capacity of eEES, charge the EV from the electrical grid during the cheap tariff window. The controller is also configured to, in both cases of electrical grid charging, set the upper limit SOCs (UL_{sEES} and UL_{eEES}) according to the current SOC and the amount of grid import needed for the EES. If there is no need to import from the electrical grid, the controller is configured to set the lower limit SOC only to prevent grid import and allow discharge from the EES. Similarly, if there is no cheap tariff available, the controller is configured to set only a lower limit SOC. The upper limit SOC for EES, when it is charging from PV (default), is 100%. The electrical grid import forecast (without EV) is: E_{grid,fcast} = max((E_{con,fcast} - E_{gen,fcast} - (SOC_{sEES}-LLs_{EES})/100 x E_{sEES,max}), 0). The available capacity of EV eEES prior to electrical grid import period is: E_{eEES, available} = E_{eEES,max}(1-SOC_{eEES}/100).

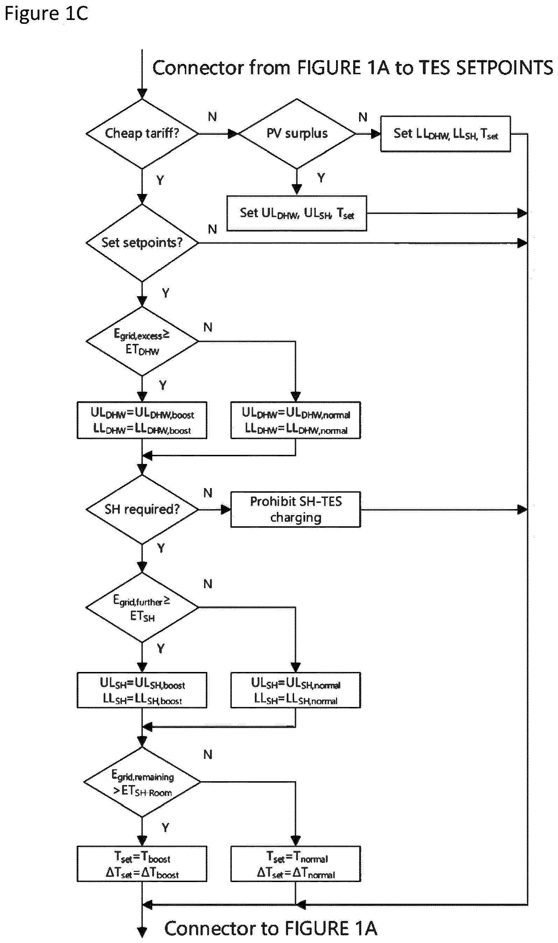

Figure 1C schematically illustrates a configuration of the controller of the system according to the invention for setting setpoints of thermal energy storage devices. There are two thermal storages considered in this specific example of the invention, namely a thermal energy storage device for domestic hot water provision (DHW-TES) and a thermal energy storage device for space heating provision (SH-TES). There can also be the building itself as thermal storage (SH-Room or SH-Building). Like the EES setpoints, the controller is configured to set TES setpoints once in each cheap tariff period. Setpoints for TES can be set by the controller according to the amount of grid import needed for a house and the energy thresholds for TES. For example, the controller is configured to, if there is a need for more grid import (when demand is greater than or equal to an energy threshold value for DHW (ET_{DHW}), after charging the sEES to its UL_{sEES} set value), set both the upper limit (UL_{DHW}) and lower limit (LL_{DHW}) SOC for DHW-TES to their boosted values. Moreover, the controller is configured to, if sEES is sufficient for the required grid import, set UL_{DHW} and LL_{DHW} to their normal (default) values. After setting the setpoints for DHW-TES by the controller, further grid import to charge the SH-TES could be implemented only if there is a need for space heating, i.e. if energy should be withdrawn from the SH-TES for space heating provision. The grid import to the SH-TES depends on the total amount of grid import for the building and the amount of energy is estimated to be imported to sEES and DHW-TES. Similar to the DHW-TES settings, the controller is configured to set SH-TES setpoints to boosted values to allow higher grid import. After setting the setpoints for sEES, DHW-TES, and SH-TES by the controller, the building fabric and internal space could be used to store additional heat, if required. In this regard, the controller can be configured to set the room temperature to a higher value. The controller is configured to set all the setpoints for the energy storage devices during the electrical grid import periods in a way that the energy supply and demand for the building are balanced by the end of the day. However, the controller is configured to, if there is no need for space heating, e.g., during the months of summer, prohibit grid imports for charging the SH-TES or heating the internal space. This prevents energy waste. To increase the self-consumption and self-sufficiency of the building, the controller is configured to activate the two (or three) thermal storage devices in a similar order as it is in the electrical grid charging period. This allows the storage of additional heat if there is surplus of renewable energy generation. In such a case, the controller is configured to set the upper limit SOC according to the amount of generation from renewable energy sources. The controller is also configured to, in other normal operation periods, set lower limit SOC thresholds for thermal storage to a minimum discharge limit. The estimated excess grid import needed for a building after fully charging the sEES from the electrical grid is: E_{grid,excess} = E_{grid,fcast} - E_{grid,sEES}. The estimated further grid import needed for a building after charging the sEES and DHW-TES from the electrical grid is: E_{grid,further} = E_{grid,excess} - E_{grid,DHW}. The estimated remaining grid import needed for the house after charging the sEES, DHW-TES and SH-TES from the electrical grid is: E_{grid,remaining} = E_{grid,further} - E_{grid,SH}.

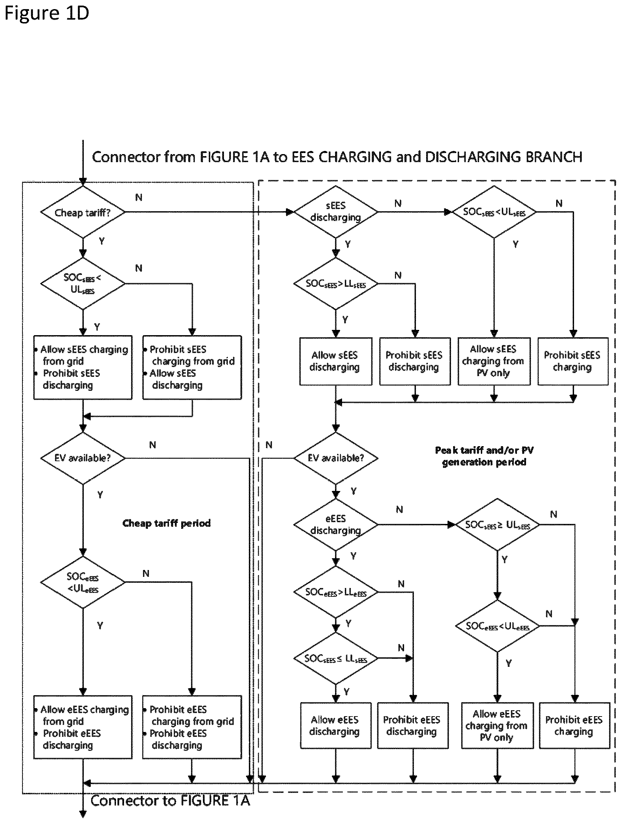

Figure 1D schematically illustrates a configuration of the controller of the system according to the invention for controlling charge and discharge of the electrical energy storage devices. EES charging and discharging has two sections, namely sEES and eEES charging from the grid and discharging to the building during the cheap tariff period, and sEES and eEES charging from PV and discharging to the building during the peak tariff and/or PV generation periods. The controller is configured to monitor the current SOC of each EES device and to compare them with the upper and lower limit set values. Moreover, the controller is configured to, if there is a cheap tariff period and the SOCs of EES (SOC_{sEES} and SOC_{eEES}) are below their upper limit SOC thresholds (UL_{sEES} and UL_{eEES}), charge sEES and eEES from the electrical grid and prohibit discharging to the building. Furthermore, if the opposite is true, the controller is configured to prohibit charging the EES from the electrical grid. While EES charging from the grid in a cheap tariff period is prohibited, the controller can be configured to allow sEES to be discharged to the building if the current SOC is higher than the UL_{sEES}. In contrast, for a similar situation, the controller is configured to prohibit eEES discharge to the building if there is a cheap tariff period. The reason for this is that sEES is the default storage for the PV-battery system, which is configured to charge from either PV or cheaper grid electricity by the control device. Whereas EV may not be available during the time of high PV generation to be able to store any excess generation to the eEES. Besides, the eEES may also be charging from the electrical grid elsewhere (e.g., public charging infrastructure) at a higher cost. Outside the cheap tariff period, i.e. in an expensive tariff period, the controller is configured to prioritize sEES over eEES for both charging from the PV and discharging to the building. When there is an electricity demand, the controller is configured to allow sEES to discharge if the current SOC is higher than the lower limit SOC (LL_{sEES}). Once sEES is discharged fully, and if EV is available and the current SOC of eEES is higher than the lower limit SOC (LL_{eEES}), the controller is configured to allow eEES to be discharged to the building. The charging of EES from PV, however, is controlled by the upper limit SOC set values. In this control example, the upper limit SOC for EES in the cheap tariff period is dynamically set by the controller (meaning that its value will change in each cheap tariff period based on current SOC and PV generation and building demand forecast values) and is different from the upper limit SOC in the PV generation period (for which the default value is 100%). Similar to the discharging, the controller is configured to charge sEES fully from the PV first and to charge the eEES afterwards from the PV.

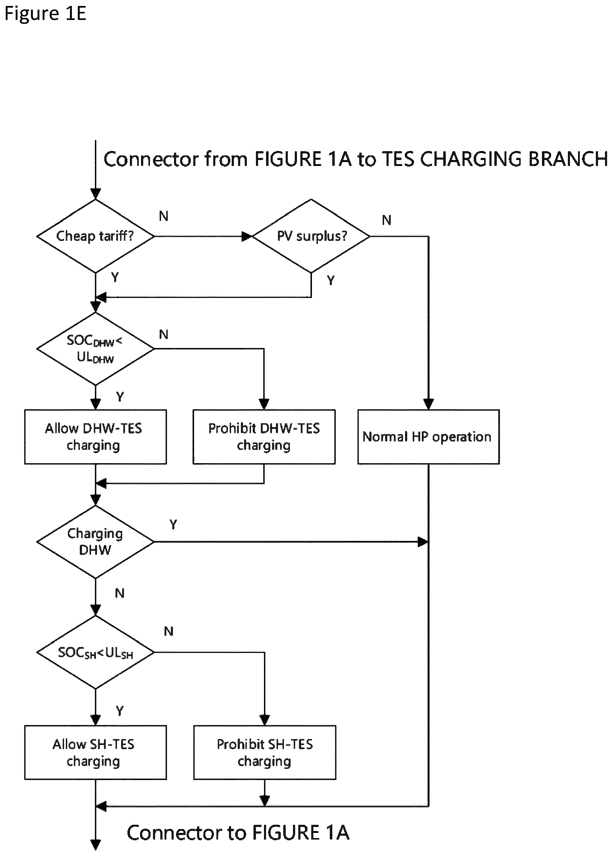

Figure 1E schematically illustrates a configuration of the controller of the system according to the invention for charging the thermal energy storage devices. The TES charging branch has five different control actions here, namely to allow DHW-TES charging using electrical energy from the grid, to prohibit DHW-TES charging from the grid, to allow SH-TES charging from the grid, to prohibit SH-TES charging from the grid, and to perform a normal HP operation. If DHW-TES charging is allowed, charging of the DHW-TES to UL_{DHW} is initiated by the controller if SOC_{DHW} < LL_{DHW}. If SH-TES charging is allowed, charging of the SH-TES to UL_{SH} is initiated by the controller if SOC_{SH} < LL_{SH}. The controller is configured to monitor the current state of charge for DHW and SH-TES (SOC_{DHW} and SOC_{SH}) and to compare it with their upper limit SOC set values (UL_{DHW} and UL_{SH}) and to decide if grid charging for TES is allowed or prohibited. The controller is also configured to, if there is a cheap tariff period and the SOC values are lower than the upper limit set values, allow TES to be charged from the electrical grid. Moreover, the controller is configured to prioritize DHW-TES over the SH-TES.

The controller is also configured to maintain the charging of TES and to prioritize the same when there is surplus generation from PV.

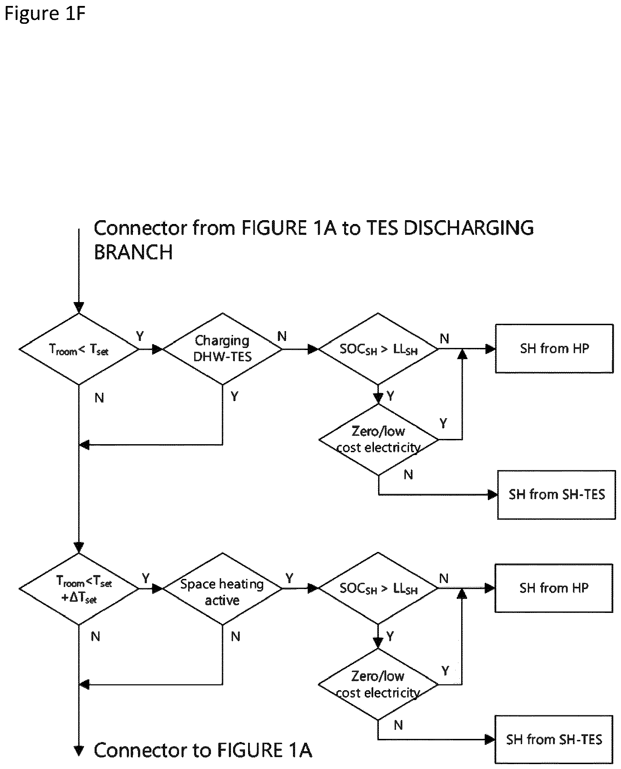

Figure 1F schematically illustrates a configuration of the controller of the system according to the invention for discharging of the thermal energy storage devices. On the TES discharging branch, the controller is configured to monitor the current room temperature in relation to lower and upper deadband limits for room temperature. The controller is also configured to initiate space heating if the room temperature falls below the lower deadband limit. Moreover, the controller is configured to operate in different modes to either supply heat emitters with thermal energy directly from the heat pump or SH-TES. In this context, the controller is configured to, if there is a need for space heating and if zero/low cost electricity (electricity from PV/PV-sEES, cheap tariff grid, eEES) is available, provide space heating by the HP (thereby consuming electrical energy) and to, if SH-TES has enough capacity to provide required space heating and if zero/low cost electricity is not available, provide space heating by the SH-TES (thereby avoiding or delaying the consumption of electrical energy).

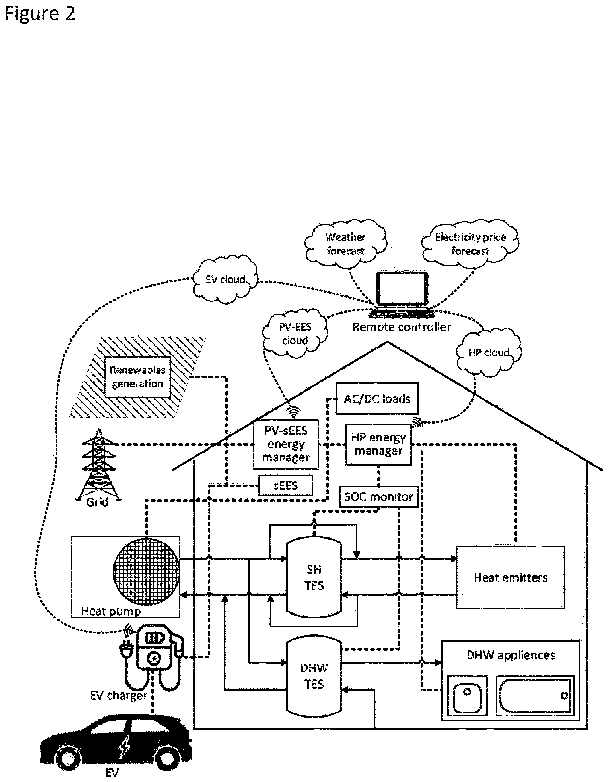

Figure 2 schematically illustrates a first system according to the invention. In this system, the controller is a remote controller which is connected to all the building energy hardware including a heat pump, an EV with a disconnectable EES (eEES), a stationary EES (sEES), renewables generation, DHW-TES, SH-TES, SOC monitoring system/software and the appliances and which is also connected to forecasting data sources via cloud API services. The controller exchanges data with the connected hardware and either controls the hardware directly or feeds settings into the hardware individual controllers, e.g., charging and discharging control of sEES via PV-sEES manager, or activation/deactivation of DHW or SH heating modes, etc.

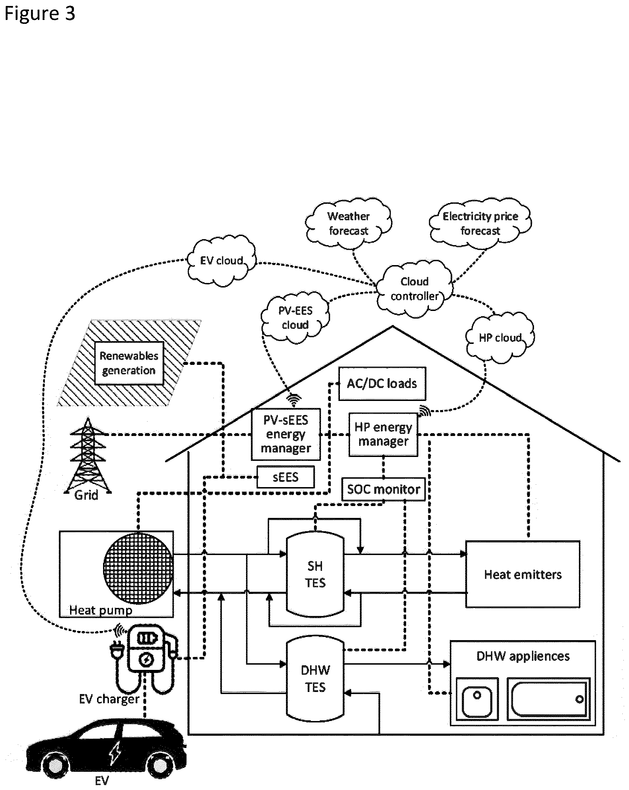

Figure 3 schematically illustrates a second system according to the invention. In this system, the controller is a cloud controller. Hence, the need for a physical remote controller can be eliminated. However, in this example, an internet connected adapter is still needed to communicate between the cloud controller and device level controllers.

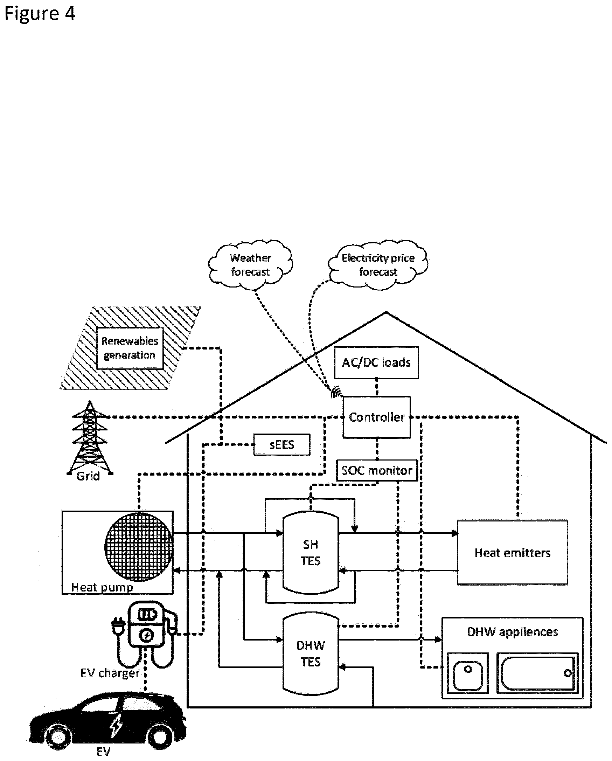

Figure 4 schematically illustrates a third system according to the invention. In this system, the controller is a local controller (e.g. a programmable logic controller (PLC)). The local controller could also replace the individual device level controllers by simply incorporating all the functions of device level controllers into the main local controller. However, the control device still needs to be connected with internet to retrieve forecast data.

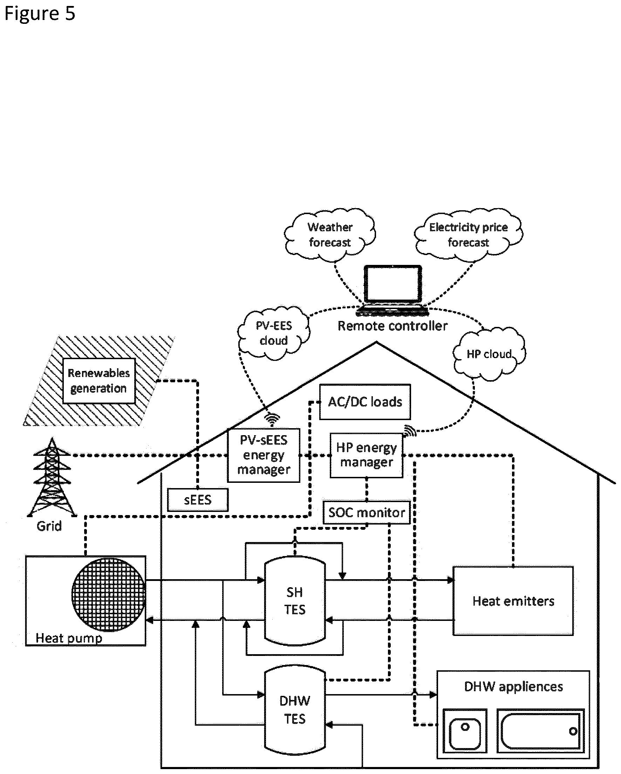

Figure 5 schematically illustrates a fourth system according to the invention which is identical to the first system shown in Figure 2 with the exception that the at least one mobile electrical energy storage device (EV) is presently not connected to the system, i.e. presently detached from the system, and the EV charger is not illustrated.

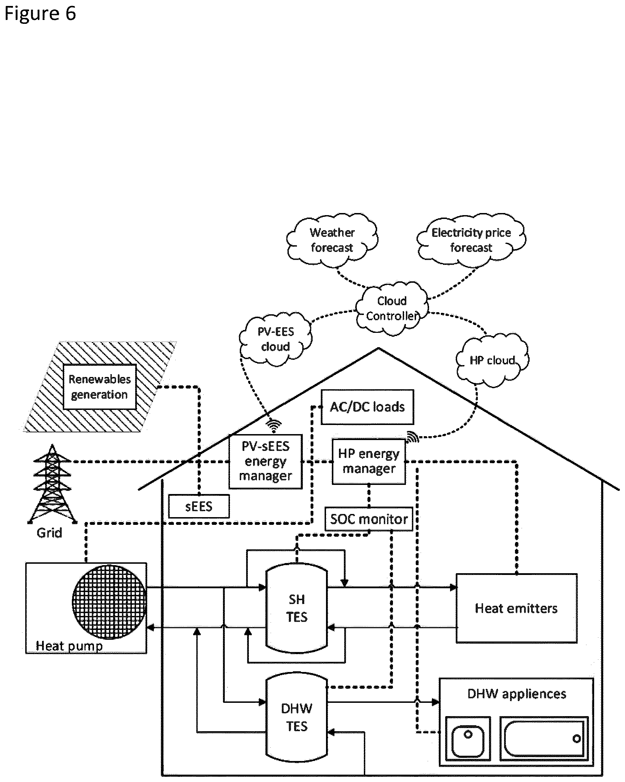

Figure 6 schematically illustrates a fifth system according to the invention which is identical to the second system shown in Figure 3 with the exception that the at least one mobile electrical energy storage device (EV) is presently not connected to the system, i.e. presently detached from the system, and the EV charger is not illustrated.

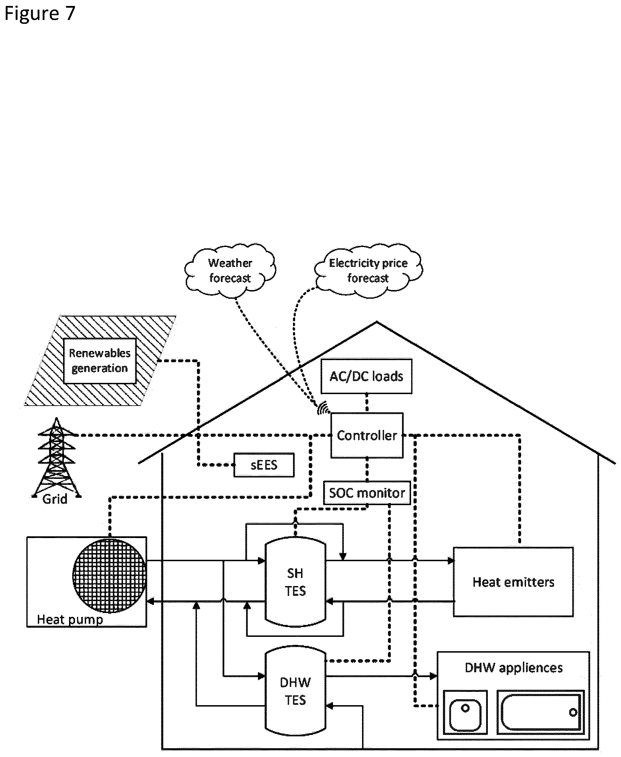

Figure 7 schematically illustrates a sixth system according to the invention which is identical to the third system shown in Figure 4 with the exception that the at least one mobile electrical energy storage device (EV) is presently not connected to the system, i.e. presently detached from the system, and the EV charger is not illustrated.

### Example - Possible elements of a system according to the invention

A system according to the present invention can include at least one of the following elements:

### Connected devices

▪ Electrically-driven heat pump
▪ Electrical resistance heater (e.g. immersion or in-line electrical resistance heater)
▪ Thermal Energy Storage TES (e.g. PCM, hot water tank), capable of being charged and discharged independently/simultaneously (e.g. via separate ports)
   - Separate DHW storage (e.g. DHW tank, PCM melting 40-80°C)
   - Separate SH storage (e.g. buffer tank, PCM melting 30-60°C)
   - Combined TES for SH and DHW
   - The building
▪ Space heating (SH) heat emitter devices (e.g. radiators under floor heating/ walls, fan coil units FCU)
▪ DHW consuming devices (bathtub, sink, hot water appliances)
▪ On-site renewable energy generation (e.g. PV panels, wind turbine)
▪ Stationary electrical energy storage (sEES) system including inverters, solar chargers, battery management systems BMS, and PV-sEES energy manager.
▪ Electric Vehicle with disconnectable eEES and its energy management system including vehicle to home (V2H) charger and BMS.

### Connected software:

▪ Application programming interface (API) for PV-sEES systems
▪ API for system components, e.g., heat pump and EV charger
▪ API for forecasting data, e.g., weather and electricity forecasts data.
▪ API for calendar data to get EV trips plan (e.g. Microsoft Outlook).
▪ API for geographical map service (e.g. Google maps) to estimate EV demand profile.

### Inputs:

▪ External data
   - Time-of-use electricity tariff (ToU) information
   - Weather data (forecast or live)
▪ Immediate DHW demand
▪ Room temperature
▪ User settings, e.g., thermostat setpoint
▪ Heat pump status
▪ Stationary EES SOC (e.g., Lower limit, current and upper limit SOC)
▪ Disconnectable EES SOC (e.g., Lower limit, current and upper limit SOC)
▪ TES SOC (e.g., temperatures of sensible heat storage devices for DHW and SH TES storage, and/or overall state of charge of latent heat storage devices, determined by one or more state of charge analysers)
▪ House electricity and DHW demand, e.g., historic and current or obtained from house simulation model and/or house demand profile.
▪ EV and trips plan data.

### Internal processing components:

▪ Control logic to maximise internal renewable energy consumption:
   - Shift as much energy demand into times of renewables availability.
   - Use thermal mass of the building as additional TES.
   - PV and ToU thresholds for system operation.
   - Boost temperature limits forTES charging during renewables availability or when charging from the grid during cheap tariff periods.
   - Optimise energy use by prioritising direct use of renewable energy to meet house demand first.
   - Use sEES, heat pump with TES, eEES, and house thermal mass as dispatchable loads in response to surplus renewable energy generation.
   - sEES SOC limit control to maximise battery capacity use.
▪ Control logic to reduce cost of energy:
   - Avoid electricity consumption during ToU price peak periods.
   - If necessary, charge sEES, eEES, DHW-TES, SH-TES during the cheap ToU tariff from the grid and discharge them during the peak price period.
   - Prevent grid export and reduce grid import.
▪ Control logic to reduce energy consumption by the heat pump:
   Use different SH setpoints depending on the weather forecasts.
▪ SOC analysers for sEES, eEES, DHW-TES, and SH-TES.
▪ Predictive components:
   - DHW demand
   - Space heating demand
      Thermal model of the building. Different predefined building types. Allows space heating prediction from weather forecast.
   - Solar irradiance model
   - Heat pump performance model
      Improved COP from weather forecast (e.g. running the heat pump when weather is better regarding the outdoor temperature-wise and when there is high PV generation) Deciding on best heat pump thermal energy receiver. Each energy receiver (e.g., direct heating from heat pump, charging SH-TES, charging DHW-TES) operates at different output temperature and temperature lift. EV demand model to translate EV trips plan into demand value.
   - Weather forecasting/ live weather data.
   - Electricity demand model for various energy consuming devices in building.
   - House level energy demand model based on the historic data and/or a combination of historic and forecasts data.

### Outputs:

▪ System status/operating modes:
   - Direct use of energy from renewable sources, when available.
   - Charge stationary and EV EES from renewables.
   - If necessary for cost savings, charge stationary and EV EES from the grid depending on the house energy demand, renewable energy generation forecast and ToU tariff.
   - Discharge stationary and EV EES to home up to a defined lower limit SOC value.
   - Charge TES at different temperatures from renewables, depending on the renewables generation.
   - If necessary for cost savings, charge TES at different temperatures from the grid depending on the house energy demand, renewable energy generation forecast and ToU tariff.
   - Discharge DHW from energy storage but preheat mains water first in heat pump to conserve energy and smoothen heat pump operation.
   - Provide space heating from TES.
   - Provide space heating from heat pump.
   - Charge TES with heat pump powered by sEES and/or eEES.

### Additional possible system elements:

▪ Household appliances preferably connected to DHW, e.g. dishwasher, washing machine
▪ Other heat sources and/or energy components:
   - Waste water heat recovery

### List of reference signs and abbreviations

- AC/DC loads:: alternate current/direct current loads
- DHW:: Domestic hot water
- DHW-TES:: Thermal energy storage for domestic hot water
- EES:: Electrical energy storage
- E_{con,fcast}:: House energy consumption forecast for house
- E_{gen,fcast}:: Energy generation forecast
- E_{grid,fcast}:: Electrical grid import forecast
- eEES:: Disconnectable or EV EES
- E_{eEES,available}:: Available energy in the EV EES
- ET_{DHW}:: Energy threshold for initiating a DHW-TES cycle from the grid
- ET_{SH}:: Energy threshold for initiating a SH-TES cycle from the grid
- EV:: electric vehicle
- EV charger:: charger for electric vehicle
- EV cloud:: electric vehicle cloud
- EV_{con,fcast}:: EV energy consumption forecast
- Grid:: Electrical grid
- HP:: Heat pump
- HP cloud:: Heat pump cloud
- HP energy manager: Heat pump energy manager
- LL_{sEES}:: Lower limit state of charge threshold for sEES
- LL_{eEES}:: Lower limit state of charge threshold for eEES
- LL_{DHW}:: Lower limit state of charge threshold for DHW-TES
- LL_{DHW,boost}:: Lower limit state of charge threshold for DHW-TES at boosted value
- LL_{SH}:: Lower limit state of charge threshold for SH-TES
- LL_{SH,boost}:: Lower limit state of charge threshold for SH-TES at boosted value
- N:: Decision result negative - "No"
- PV:: Renewable energy source, e.g. photovoltaics
- PV-EES cloud:: Photovoltaics-electrical energy storage device cloud
- SH-TES:: Thermal energy storage for space heating
- SOC:: State of charge
- SOC monitor:: State of charge analyser
- SOC_{eEES}:: State of charge of eEES
- SOC_{sEES}:: State of charge of sEES
- SOC_{DHW}:: State of charge of DHW-TES
- SOC_{SH}:: State of charge of SH-TES
- SH:: Space heating
- sEES:: Stationary EES
- T_{set,boost}:: Boosted target room temperature
- T_{set,normal}:: Normal target room temperature
- Tᵣₒₒₘ:: Measured temperature of a room (of a building)
- Tₛₑₜ:: Target room temperature setpoint, e.g. thermostat set-point
- ToU:: Time-of-use electricity tariff
- TES:: Thermal energy storage
- ΔTₛₑₜ:: Room temperature deadband
- UL_{DHW}:: Upper limit state of charge threshold for DHW-TES
- UL_{DHW,boost}:: Upper limit state of charge threshold for DHW-TES at boosted value
- UL_{SH}:: Upper limit state of charge threshold for SH-TES
- UL_{SH,boost}:: Upper limit state of charge threshold for SH-TES at boosted value
- UL_{eEES}:: Upper limit state of charge threshold for eEES
- UL_{sEES}:: Upper limit state of charge threshold for sEES
- Y:: Decision result positive - "Yes"

## Claims

1. System for controlling a consumption of electrical energy, comprising
a) an electrical grid connection for providing the system with electrical energy;
b) at least one renewable energy generation device for providing the system with electrical energy;
c) at least one stationary electrical energy storage device comprising a state of charge analyser which is configured to determine an amount of electrical energy stored in the at least one stationary electrical energy storage device;
d) at least one thermal energy storage device comprising a state of charge analyser which is configured to determine an amount of thermal energy stored in the at least one thermal energy storage device;
e) a heat pump for providing the at least one thermal energy storage device with heat energy;
f) at least one forecast data source which is suitable to provide an electricity tariff forecast; and
g) a controller which is configured to obtain information of the at least one forecast data source and which is configured to control a charging and a discharging of the at least one stationary electrical energy storage device based on information obtained from the at least one forecast data source;
**characterized in that** the system comprises at least one mobile electrical energy storage device being detachably connected to the system and comprising a state of charge analyser which is configured to determine an amount of electrical energy stored in the at least one mobile electrical energy storage device,
wherein the controller is configured to control a charging and a discharging of the at least one mobile electrical energy storage device based on information obtained from the at least one forecast data source.

2. System according to the preceding claim, **characterised in that** the controller is configured to obtain information of the at least one forecast data source, or of a further data source, which is suitable to provide a forecast about
i) an energy stored in the mobile electrical energy storage device,
wherein the mobile electrical energy storage device is preferably an electrical vehicle; and/or
ii) a production of electrical energy by the at least one renewable energy generation device; and/or
iii) a consumption of energy of a building provided by the at least one forecast unit; and/or
iv) weather, preferably a solar irradiance forecast, ambient temperature forecast and/or wind speed forecast, wherein the forecast is preferably provided by the at least one data source; and/or
wherein the controller is preferably configured to control a charging and a discharging of the at least one stationary electrical energy storage device and of the at least one mobile electrical energy storage device based on information obtained from the at least one forecast data source or of the further data source.

3. System according to one of the preceding claims, **characterised in that** the controller is configured to perform iterations of control parameters of the system in predefined periods of time, preferably to receive, in predefined periods of time, updates regarding a forecast relating to
i) an electricity tariff; and/or
ii) an energy stored in the mobile electrical energy storage device,
wherein the mobile electrical energy storage device is preferably an electrical vehicle;
iii) a production of electrical energy by the at least one renewable energy generation device; and/or
iv) a consumption of energy of a building; and/or
v) weather, preferably updates on a solar irradiance forecast, an ambient temperature forecast and/or a wind speed forecast.

4. System according to one of the preceding claims, **characterised in that** the controller is configured to, in a period of time in which a forecast relating to the electricity tariff reveals a cheap electricity tariff, determine an amount of electrical energy which is provided from the electrical grid for charging the at least one stationary electrical energy storage device based on a forecast relating to
i) a consumption of energy of a building; and/or
ii) a production of electrical energy by the at least one renewable energy generation device; and/or
iii) a provision of electrical energy by the electrical grid; and/or
iv) a current state of charge of the at least one stationary electrical energy storage device; and/or
v) a lower limit state of charge of the at least one stationary electrical energy storage device.

5. System according to one of the preceding claims, **characterised in that** the controller is configured to, in a period of time in which a forecast relating to the electricity tariff reveals a cheap electricity tariff, to determine an amount of electrical energy which is provided from the electrical grid for charging the at least one mobile electrical energy storage device based on a forecast relating to
i) a consumption of energy of the at least one mobile electrical energy storage device; and/or
ii) a production of electrical energy by the at least one renewable energy generation device; and/or
iii) a current state of charge of the at least one mobile electrical energy storage device; and/or
iv) a lower limit state of charge of the at least one mobile electrical energy storage device.

6. System according to one of the preceding claims, **characterised in that** the controller is configured to, in a period of time in which a forecast relating to the electricity tariff reveals an expensive electricity tariff,
i) set a setpoint of a lower limit state of charge of the at least one stationary electrical energy storage device to a setpoint which prevents a requirement to charge from the electrical grid, preferably only once for each period of time in which a forecast relating to the electricity tariff reveals an expensive electricity tariff;
and/or
ii) set a setpoint of a lower limit state of charge of the at least one mobile electrical energy storage device to a setpoint which prevents a requirement to charge from the electrical grid, preferably only once for each period of time in which a forecast relating to the electricity tariff reveals an expensive electricity tariff.

7. System according to one of the preceding claims, **characterised in that** the controller is configured to, in a period of time in which a forecast relating to the electricity tariff reveals a cheap electricity tariff, and a forecast relating to
i) a provision of electrical energy from the electrical grid reveals a provision of electrical energy of more than zero, set an upper limit state of charge threshold of the at least one stationary electrical energy storage device to control a charging limit of the at least one stationary electrical energy storage device; and/or
ii) a provision of electrical energy from the electrical grid reveals a provision of electrical energy of zero, set a lower limit state of charge threshold of the at least one stationary electrical energy storage device to control a discharging limit of the at least one stationary electrical energy storage device; and/or
iii) an energy consumption from the at least one mobile electrical energy storage device reveals an energy consumption which is larger than an energy which is available in the at least one mobile electrical energy storage device, set an upper limit state of charge threshold of the at least one mobile electrical energy storage device to control a charging limit of the at least one mobile electrical energy storage device; and/or
iv) an energy consumption from the at least one mobile electrical energy storage device reveals an energy consumption which is equal to or lower than an energy which is available in the at least one mobile electrical energy storage device, set a lower limit state of charge threshold of the at least one mobile electrical energy storage device to control a discharging limit of the at least one mobile electrical energy storage device.

8. System according to one of the preceding claims, **characterised in that** the controller is configured to, in a period of time in which a forecast relating to the electricity tariff reveals an expensive electricity tariff, and a forecast relating to
i) a production of electrical energy by the at least one renewable energy generation device reveals a surplus of energy production, set an upper limit state of charge threshold of the at least one thermal energy storage device to control a charging limit of the at least one thermal energy storage device, and set a target room temperature setpoint; and/or
ii) a production of electrical energy by the at least one renewable energy generation device reveals no surplus of energy production, set a lower limit state of charge threshold of the at least one thermal energy storage device to control a discharging limit of the at least one thermal energy storage device, and set a target room temperature setpoint.

9. System according to one of the preceding claims, **characterised in that** the controller is configured to, in a period of time in which a forecast relating to the electricity tariff reveals a cheap electricity tariff, and
i) an estimated excess electrical energy from the electrical grid needed for a building after fully charging the at least one stationary electrical energy storage device from the electrical grid is equal to or larger than an energy threshold for initiating a charging cycle of the at least one thermal energy storage device from the electrical grid by the heat pump, set an upper limit state of charge of the at least one thermal energy storage device to a boosted upper limit state of charge of the at least one thermal energy storage device and set a lower limit state of charge of the at least one thermal energy storage device to a boosted lower limit state of charge of the at least one thermal energy storage device; and/or
ii) an estimated excess electrical energy from the electrical grid needed for a building after fully charging the at least one stationary electrical energy storage device from the electrical grid is lower than an energy threshold for initiating a charging cycle of the at least one thermal energy storage device from the electrical grid by the heat pump, set an upper limit state of charge of the at least one thermal energy storage device to a normal upper limit state of charge of the at least one thermal energy storage device and set a lower limit state of charge of the at least one thermal energy storage device to a normal lower limit state of charge of the at least one thermal energy storage device.

10. System according to one of the preceding claims, **characterised in that** the controller is configured to, in a period of time in which a forecast relating to the electricity tariff reveals a cheap electricity tariff, and a state of charge of the at least one stationary electrical energy storage device is
i) lower than an upper limit state of charge of the at least one stationary electrical energy storage device, allow a charging of the at least one stationary electrical storage device from the electrical grid and prohibit a discharging of the at least one stationary electrical storage device; and/or
ii) equal to or larger than an upper limit state of charge of the at least one stationary electrical energy storage device, prohibit a charging of the at least one stationary electrical storage device from the electrical grid and allow a discharging of the at least one stationary electrical storage device.

11. System according to one of the preceding claims, **characterised in that** the controller is configured to, in a period of time in which a forecast relating to the electricity tariff reveals a cheap electricity tariff, and a state of charge of the at least one mobile electrical energy storage device is
i) lower than an upper limit state of charge of the at least one mobile electrical energy storage device, allow a charging of the at least one mobile electrical storage device from the electrical grid and prohibit a discharging of the at least one mobile electrical storage device to a device connected to the system; and/or
ii) equal to or larger than an upper limit state of charge of the at least one mobile electrical energy storage device, prohibit a charging of the at least one mobile electrical storage device from the electrical grid and prohibit a discharging of the at least one mobile electrical storage device to a device connected to the system.

12. System according to one of the preceding claims, **characterised in that** the controller is configured to, in a period of time in which a forecast relating to the electricity tariff reveals an expensive electricity tariff, and
i) the at least one stationary electrical storage device is currently discharging and a state of charge of the at least one stationary electrical storage device is higher than a lower limit state of charge of the at least one stationary electrical storage device, allow a further discharging of the at least one stationary electrical storage device; and/or
ii) the at least one stationary electrical storage device is currently discharging and a state of charge of the at least one stationary electrical storage device is equal to or lower than a lower limit state of charge of the at least one stationary electrical storage device, prohibit a further discharging of the at least one stationary electrical storage device; and/or
iii) the at least one stationary electrical storage device is currently not discharging and a state of charge of the at least one stationary electrical storage device is lower than an upper limit state of charge of the at least one stationary electrical storage device, allow a charging of the at least one stationary electrical storage device from the at least one renewable energy generation device only; and/or
iv) the at least one stationary electrical storage device is currently not discharging and a state of charge of the at least one stationary electrical storage device is equal to or higher than an upper limit state of charge of the at least one stationary electrical storage device, prohibit a charging of the at least one stationary electrical storage device.

13. System according to one of the preceding claims, **characterised in that** the controller is configured to, in a period of time in which a forecast relating to the electricity tariff reveals an expensive electricity tariff, and
i) the at least one mobile electrical storage device is currently discharging, a state of charge of the at least one mobile electrical storage device is higher than a lower limit state of charge of the at least one mobile electrical storage device and a state of charge of the at least one stationary electrical storage device is equal to or lower than a lower limit state of charge of the at least one stationary electrical storage device, allow a discharging of the at least one mobile electrical storage device; and/or
ii) the at least one mobile electrical storage device is currently discharging, a state of charge of the at least one mobile electrical storage device is higher than a lower limit state of charge of the at least one mobile electrical storage device and a state of charge of the at least one stationary electrical storage device is higher than a lower limit state of charge of the at least one stationary electrical storage device, prohibit a discharging of the at least one mobile electrical storage device; and/or
iii) the at least one mobile electrical storage device is currently discharging and a state of charge of the at least one mobile electrical storage device is equal to or lower than a lower limit state of charge of the at least one mobile electrical storage device, prohibit a discharging of the at least one mobile electrical storage device; and/or
iv) the at least one mobile electrical storage device is currently not discharging, a state of charge of the at least one stationary electrical storage device is equal to or higher than an upper limit state of charge of the at least one stationary electrical storage device and a state of charge of the at least one mobile electrical storage device is lower than an upper limit state of charge of the at least one mobile electrical storage device, allow a charging of the at least one mobile electrical storage device from the at least one renewable energy generation device only; and/or
v) the at least one mobile electrical storage device is currently not discharging, a state of charge of the at least one stationary electrical storage device is equal to or higher than an upper limit state of charge of the at least one stationary electrical storage device and a state of charge of the at least one mobile electrical storage device is equal to or higher than an upper limit state of charge of the at least one mobile electrical storage device, prohibit a charging of the at least one mobile electrical storage device; and/or
vi) the at least one mobile electrical storage device is currently not discharging and a state of charge of the at least one stationary electrical storage device is lower than an upper limit state of charge of the at least one stationary electrical storage device, prohibit a charging of the at least one mobile electrical storage device.

14. System according to one of the preceding claims, **characterised in that** the controller is configured to, in a period of time in which a forecast relating to the electricity tariff reveals a cheap electricity tariff, and
i) a state of charge of the at least one thermal energy storage device is lower than an upper limit state of charge of the at least one thermal energy storage device, allow a charging of the at least one thermal energy storage device; and/or
ii) a state of charge of the at least one thermal energy storage device is equal to or higher than an upper limit state of charge of the at least one thermal energy storage device, prohibit a charging of the at least one thermal energy storage device.

15. System according to one of the preceding claims, **characterised in that** the controller is configured to, in a period of time in which a forecast relating to the electricity tariff reveals an expensive electricity tariff, and there is
i) no surplus of energy from the at least one renewable energy generation device, perform a normal operation of the heat pump;
and/or
ii) a surplus of energy from the at least one renewable energy generation device and a state of charge of the at least one thermal energy storage device is lower than an upper limit state of charge of the at least one thermal energy storage device, allow a charging of the at least one thermal energy storage device; and/or
iii) a surplus of energy from the at least one renewable energy generation device and a state of charge of the at least one thermal energy storage device is equal to or higher than an upper limit state of charge of the at least one thermal energy storage device, prohibit a charging of the at least one thermal energy storage device.

16. System according to one of the preceding claims, **characterised in that** the system comprises at least one second thermal energy storage device, preferably a space heating thermal energy storage device, and the controller is configured to, in a period of time in which a forecast relating to the electricity tariff reveals a cheap electricity tariff, and a forecast relating to a consumption of energy of a building reveals that the at least one second thermal energy storage device is required, and
i) an estimated further electrical grid energy provision needed for the building after fully charging the at least one stationary electrical storage device and after fully charging the at least one thermal energy storage device is equal to or larger than an energy threshold for initiating a charging cycle of the at least one second thermal energy storage device from the electrical grid, set an upper limit state of charge of the at least one second thermal energy storage device to a boosted upper limit state of charge of the at least one second thermal electrical energy storage device and set a lower limit state of charge of the at least one second thermal energy storage device to a boosted lower limit state of charge of the at least one second thermal energy storage device; and/or
ii) an estimated further electrical grid energy provision needed for the building after fully charging the at least one stationary electrical storage device and after fully charging the at least one thermal energy storage device is lower than an energy threshold for initiating a charging cycle of the at least one second thermal energy storage device from the electrical grid, set an upper limit state of charge of the at least one second thermal energy storage device to a normal upper limit state of charge of the at least one second thermal energy storage device and set a lower limit state of charge of the at least one second thermal energy storage device to a normal lower limit state of charge of the at least one second thermal energy storage device,
wherein the controller is preferably configured to, if
- an estimated remaining electrical grid energy provision needed for a building after fully charging the at least one stationary electrical storage device, after fully charging the at least one thermal energy storage device and after fully charging the at least one second thermal energy storage device from the electrical grid is larger than an energy threshold for initiating a heating cycle of the building from the electrical grid, set a target room temperature setpoint to a boosted target room temperature and set a room temperature deadband to a boosted room temperature deadband;
and/or
- an estimated remaining electrical grid energy provision needed for a building after fully charging the at least one stationary electrical storage device, after fully charging the at least one thermal energy storage device and after fully charging the at least one second thermal energy storage device from the electrical grid is equal to or lower than an energy threshold for initiating a heating cycle of the building from the electrical grid, set a target room temperature setpoint to a normal target room temperature and set a room temperature deadband to a normal room temperature deadband.

17. System according to one of the preceding claims, **characterised in that** the system comprises at least one second thermal energy storage device, preferably a space heating thermal energy storage device, and the controller is configured to, in a period of time in which a forecast relating to the electricity tariff reveals a cheap electricity tariff, and
i) the at least one thermal energy storage device is currently not charging and a state of charge of the at least one second thermal energy storage device is lower than an upper limit state of charge of the at least one second thermal energy storage device, allow a charging of the at least one second thermal energy storage device; and/or
ii) the at least one thermal energy storage device is currently not charging and a state of charge of the at least one second thermal energy storage device is equal to or higher than an upper limit state of charge of the at least one second thermal energy storage device, prohibit a charging of the at least one second thermal energy storage device.

18. System according to one of the preceding claims, **characterised in that** the system comprises at least one second thermal energy storage device, preferably a space heating thermal energy storage device, and the controller is configured to perform a space heating from the at least one second thermal energy storage device if
i) a measured room temperature is lower than a target room temperature setpoint, the at least one thermal energy storage device is not charging, a state of charge of the at least one second thermal energy storage is higher than a lower limit state of charge of the at least one second thermal energy storage device and an expensive electricity tariff is available; and/or
ii) a measured room temperature is equal to or higher than a target room temperature setpoint and is lower than a sum of the target room temperature setpoint and a room temperature deadband, space heating is active, a state of charge of the at least one second thermal energy storage device is higher than a lower limit state of charge of the at least one second thermal energy storage device and an expensive electricity tariff is available.

19. System according to one of the preceding claims, **characterised in that** the system comprises at least one second thermal energy storage device, preferably a space heating thermal energy storage device, and the controller is configured to perform a space heating from the heat pump if
i) a measured room temperature is lower than a target room temperature setpoint, the at least one thermal energy storage device is not charging, a state of charge of the at least one second thermal energy storage is equal to or lower than a lower limit state of charge of the at least one second thermal energy storage device; and/or
ii) a measured room temperature is lower than a target room temperature setpoint, the at least one thermal energy storage device is not charging, a state of charge of the at least one second thermal energy storage is higher than a lower limit state of charge of the at least one second thermal energy storage device and at least one of the following is available: a cheap electricity tariff, electrical energy provided by the at least one renewable energy generation device and electrical energy stored by the at least one stationary electrical energy storage device; and/or
iii) a measured room temperature is equal to or higher than a target room temperature setpoint and is lower than a sum of the target room temperature setpoint and a room temperature deadband, space heating is active, a state of charge of the at least one second thermal energy storage device is equal to or lower than a lower limit state of charge of the at least one second thermal energy storage device; and/or
iv) a measured room temperature is equal to or higher than a target room temperature setpoint and is lower than a sum of the target room temperature setpoint and a room temperature deadband, space heating is active, a state of charge of the at least one second thermal energy storage device is higher than a lower limit state of charge of the at least one second thermal energy storage device and at least one of the following is available: a cheap electricity tariff, electrical energy provided by the at least one renewable energy generation device and electrical energy stored by the at least one stationary electrical energy storage device.

20. System according to one of the preceding claims, **characterised in that** the controller of the system is selected from the group consisting of a controller located at a building, a remote controller and a cloud controller, wherein the controller is preferably a cloud controller.
